Europäisches Patentamt

(19) European Patent Office

Office européen des brevets

(11) Veröffentlichungsnummer: **0 116 110**
**A1**

## EUROPÄISCHE PATENTANMELDUNG

(21) Anmeldenummer: 83108326.6

(22) Anmeldetag: 24.08.83

(51) Int. Cl.³: **B 23 K 7/02**
**B 22 D 11/126**

(30) Priorität: 07.01.83 DE 8300198 U

(43) Veröffentlichungstag der Anmeldung:
22.08.84 Patentblatt 84/34

(84) Benannte Vertragsstaaten:
AT BE CH DE FR GB IT LI

(71) Anmelder: AUTE Gesellschaft für autogene Technik mbH
Zollikerstrasse 228
CH-8029 Zürich(CH)

(72) Erfinder: Lotz, Horst K.
Kiefernweg 13
D-6238 Hofheim-Delkenheim(DE)

(74) Vertreter: Blumbach Weser Bergen Kramer Zwirner Hoffmann Patentanwälte
Sonnenbergerstrasse 43
D-6200 Wiesbaden 1(DE)

(54) Brennschneidmaschine.

(57) Bei einer Brennschneidmaschine mit Schallschutz- und Isolierhauben zum Abtrennen zuverlässig genauer Stücklängen von auf einem Rollgang oder auf einem Tisch liegenden Werkstücken aus Stahl mittels eines quer zur Vorschubrichtung bewegbaren und in seiner Arbeitshöhe verstellbaren Schneidbrenners (14), dem eine Längenmeßeinrichtung zur Messung von relativ zwischen der Brennschneidmaschine und dem Werkstück zurückgelegten Wegstrecke mit Hilfe eines an der Werkstückoberfläche ablaufenden Meßrades (15) zugeordnet ist, ist vorgesehen, daß ein Hubschild (6) an seiner Vorderseite die Schutzhaube (8) trägt, wobei die Meßrolle (15) auf der hinteren Seite des Hubschilds (6) angeordnet ist, der Brenner (14) auf der dem ankommenden Strang (1) zugekehrten Seite der Brennschneidmaschine sich befindet und neben einer offenen Maschinenkühlung eine Ringleitung für die Gasversorgung vorgesehen ist.

EP 0 116 110 A1

./...

FIG.1

## Brennschneidmaschine

Die Erfindung betrifft eine Brennschneidmaschine mit Schallschutz- und Isolierhauben zum Abtrennen zuverlässig genauer Stücklängen von auf einem Rollgang oder auf einem Tisch liegenden Werkstücken aus Stahl mittels eines quer zur Vorschubrichtung bewegbaren und in seiner Arbeitshöhe verstellbaren Schneidbrenners, dem eine Längenmeßeinrichtung zur Messung von relativ zwischen der Brennschneidmaschine und dem Werkstück zurückgelegter Wegstrecke mit Hilfe eines an der Werkstückoberfläche ablaufenden Meßrades zugeordnet ist.

Bei derartig bekannten Brennschneidmaschinen treten die verschiedenartigsten, miteinander verknüpften Schwierigkeiten auf. So ist es erforderlich, die Brennschneidmaschine, insbesondere die Schlauch- und Kabelzuführungen und andere wärmeempfindliche Aggregate, wie die Meßrollen, zu isolieren. Auch besteht das Bedürfnis, die Brammen in einem möglichst wenig abgekühlten Zustand vom Gießstrang abzutrennen und dabei eine Abkühlung so weit wie möglich zu vermeiden, wobei andersartige Probleme der Maschinenkühlung auftreten.

Der Erfindung liegt daher die Aufgabe zugrunde, die oben geschilderten Nachteile zu vermeiden und eine Brennschneidmaschine verfügbar zu machen, bei der diese miteinander verknüpften Schwierigkeiten beseitigt sind.

Die Erfindung besteht darin, daß ein Hubschild vorgesehen ist, das an seiner Vorderseite die Schutzhaube trägt, die beim Absenken auf dem Werkstück zusammen mit dem Hubschild zur Auflage kommt, daß über die Schutzhaube am Hubschild der oder die Schneidbrenner mit Bewegungseinrichtungen angebracht sind und andere wärmeempfindliche Aggregate der Brennschneidmaschine sich außerhalb der Schallhaube befinden.

Eine vorteilhafte Ausführungsform besteht darin, daß die Schutzhaube flach und weitgehend überkragend angeordnet ist, um die Brennerbewegungseinrichtung und die etwa in Maschinenmitte ungeschützt herabhängenden Kabel und Versorgungsschläuche gegen direkte Wärmestrahlung bzw. aufsteigende Warmluft vom Werkstück zu schützen, und daß die Schutzhaube mit seitlichen Abschlußwänden versehen ist, die über die Oberfläche des Werkstücks nach unten bis zu den das Werkstück tragenden Rollen hinausragen, möglichst nahe an den Rollgangswagen, um mit diesen sich zu überlappen.

Eine Mitnahme für einen eventuell erforderlichen Synchronlauf mit einem Werkstück wird zweckmäßig dadurch erreicht, daß das Hubschild und die Unterseite der Schutzhaube mit Aufsetzprofilen versehen sind, die gemeinsam oder einzeln eine Reibung erzeugen.

Dabei stellt zweckmäßig der Abstand der Unterkante des Hubschilds von der Schutzhaube den richtigen Abstand der Düse des Brenners vom Werkstück sicher.

Eine vorteilhafte Ausführungsform einer derartigen Brennschneidmaschine zeichnet sich dadurch aus, daß der Brenner durch einen quer zur Vorschubrichtung des Werkstücks in der Oberplatte der Schallhaube vorgesehenen Bewegungsschlitz geführt ist und daß vorzugsweise der Bewegungsschlitz extrem schmal, minimal größer als der Brennschaft ausgebildet ist und an den Seiten hohe Führungen etwa das Fünf- bis Siebenfache der Schlitzbreite aufweist.

Eine Weiterbildung der Erfindung besteht darin, daß auf der hinteren Seite des Hubschilds zur Längenmessung eine Meßrolle angeordnet ist und an einem gelenkig befestigten Hebel befestigt ist, der neben der Meßrolle angeordnete Kühlscheiben trägt, die in einem Kühlwasserbad umlaufen.

Eine weitere Ausbildung der Erfindung besteht darin, daß der Brenner auf der dem ankommenden Strang zugekehrten Seite der Brennschneidmaschine angeordnet ist und die Aufklemmung, in Strangbewegungsrichtung gesehen, vorzugsweise vor der Schneidlinie am Gießstrang erfolgt.

Dabei kann zweckmäßig weiter vorgesehen sein, daß die Schutzhaube einen Teil eines teleskopartig ineinander schiebbaren Isolierkanalsystems bildet, daß der Isolierkanal aus einer festen Unterkonstruktion mit Seitenwänden besteht, über denen nur die Isolierdecke oder eine entsprechende Jalousie mit der Brennschneidmaschine mitläuft, und daß der Isolierkanal mit der Schutzhaube eine Dichtwirkung gegen Wärmeabfluß und Geräusche erzeugt, wobei vorzugsweise das Dach der Schutzhaube am Brenner zur Einsicht abhebbar ist.

Mit Vorteil ist weiter vorgesehen, daß für einen Monitor eine Kamera mit wassergekühltem Gehäuse und Tubus vorgesehen ist, die die Haube durchdringt, und daß an beiden Seiten je eine Kamera angeordnet ist.

Eine Weiterbildung der Brennschneidmaschine mit einer Mehrzahl von Brennern zeichnet sich dadurch aus, daß für jedes zuzuführende Medium, wie Schneidsauerstoff, Heizsauerstoff und Heizgas, eine gesonderte Ringleitung vorgesehen ist, von der Versorgungsleitungen für die einzelnen Brenner abgehen, daß für diese ein gemeinsamer Regler in der Zuführleitung zur Ringleitung vorgesehen ist und daß in den Versorgungsleitungen zwischen Ringleitung und Brenner Schnellentlüftungsventile angeordnet sind, die vorzugsweise unmittelbar am Austritt der Versorgungsleitungen aus der Ringleitung sich befinden, wobei die Gaszuführungen zur Ringleitung und die Steuertafel mit den zugeordneten Reglern wahlweise links oder rechts vom Gießstrang montierbar sind.

Weiter Maßnahmen zur Kühlung gemäß der Erfindung bestehen darin, daß der Kühlmantel einen offenen

4

Einlaufstutzen aufweist, in den Kühlwasser aus einer Kühlwasserzuführleitung fließt, daß Kühlwasser aus einem
offenen Ablaufstutzen den Kühlmantelhohlraum verläßt und
daß die offene Maschinenkühlung auch die Brennerkühlung
umfaßt, indem das Wasser aus dem Kühlmantel über den
Brenner kühlende Kanäle austritt, wobei die Strömung des
Kühlwassers vorzugsweise durch geeignete Querschnitte
reguliert ist und die Kühlwasserhohlräume eine Mindestreserve an Kühlmittel sicherstellen, so daß bei vorübergehender Störung in der Kühlwasserzuführung die Brennschneidmaschine geschützt ist.

Die Erfindung soll nachstehend anhand von Ausführungsbeispielen unter Bezugnahme auf die beigefügten
Zeichnungen näher erläutert werden. In den Zeichnungen
zeigen:

Fig. 1 eine Brennschneidmaschine mit Hubschild
und Schutzhaube, teilweise im Schnitt;

Fig. 2 Einzelheiten einer Längenmeßeinrichtung der Brennschneidmaschine gemäß
Fig. 1;

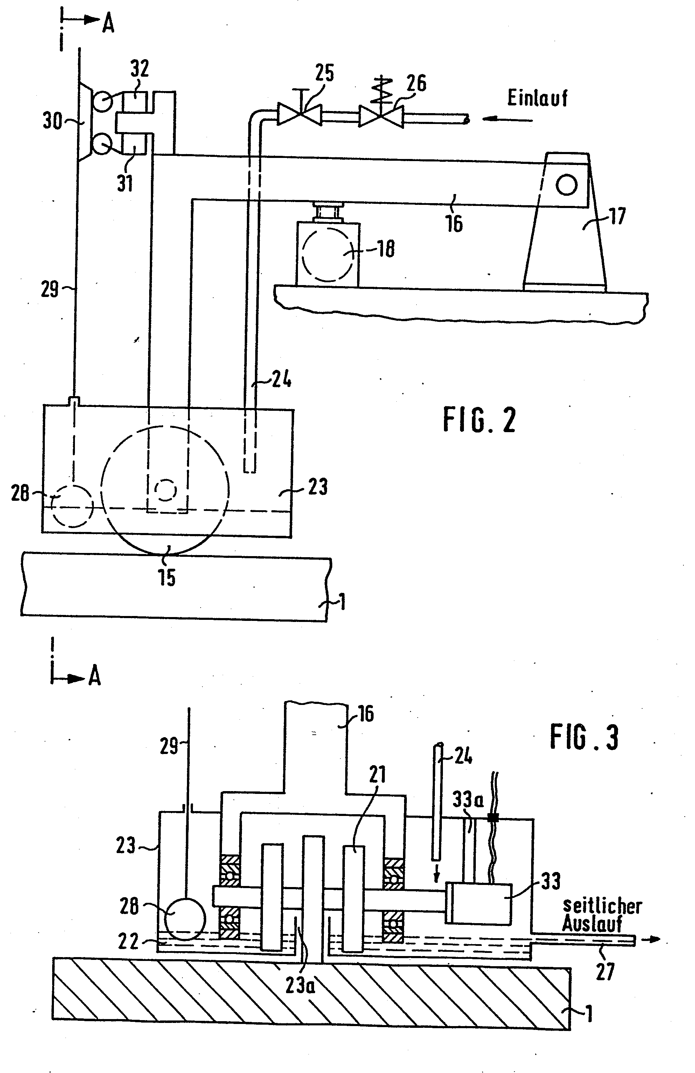

Fig. 3 eine Meßrollenansicht im Schnitt längs
der Linie A-A in Fig.2;

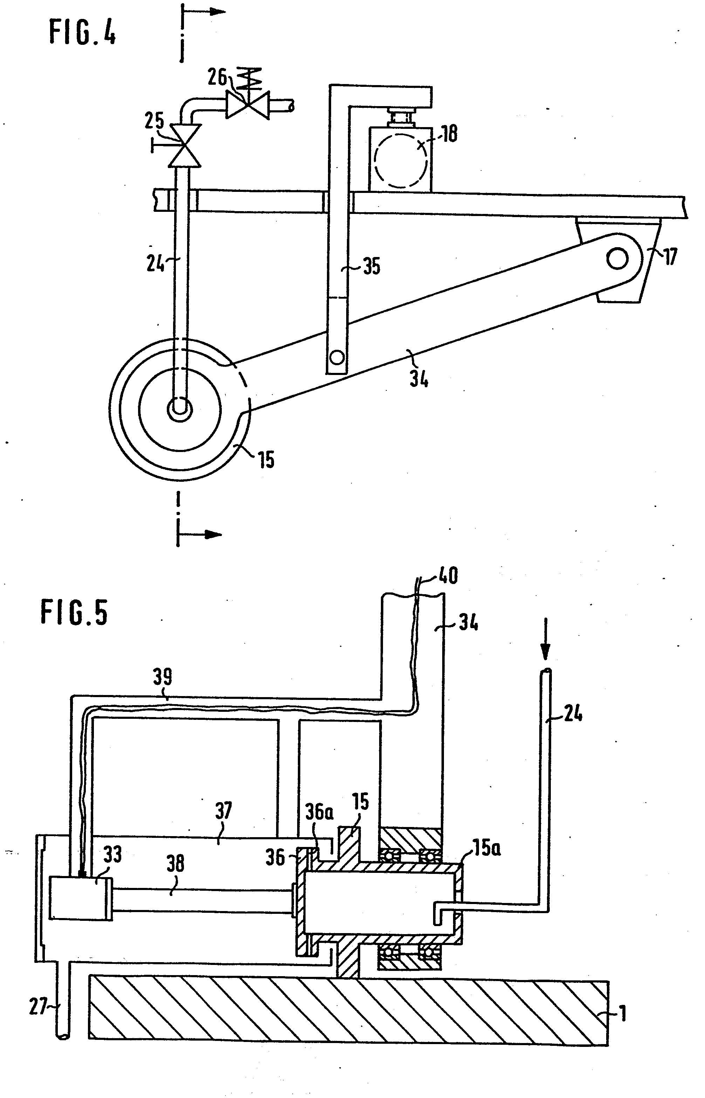

Fig. 4 eine abgewandelte Ausführungsform einer
Längenmeßeinrichtung;

Fig. 5 eine Schnittansicht einer Meßrollenanordnung längs der Linie A-A in Fig.4;

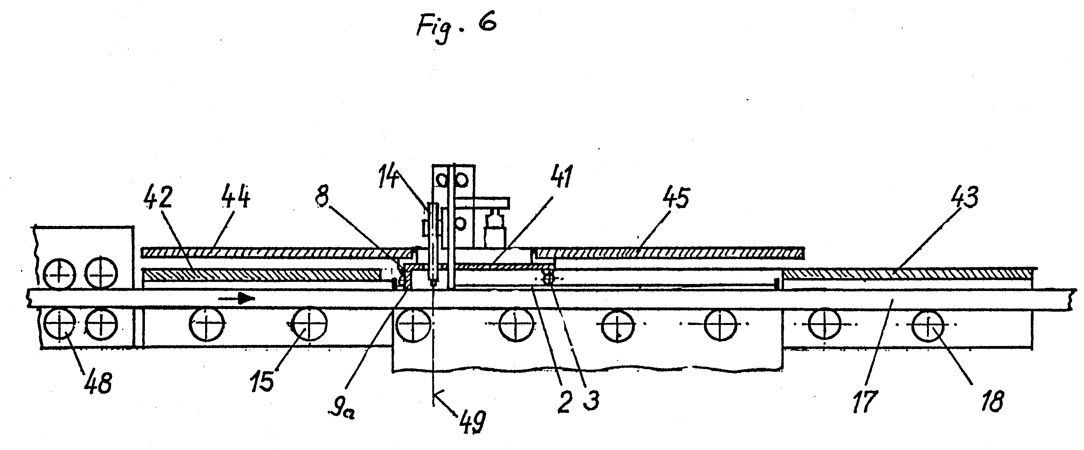

Fig. 6 eine weitere Ausführungsform einer
Brennschneidmaschine ;

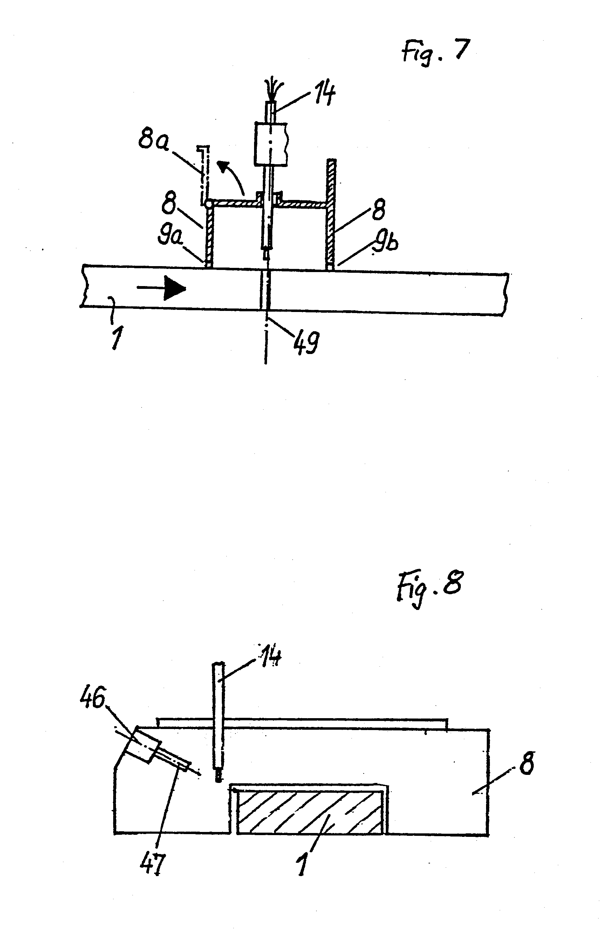

Fig. 7 ein Isolierhaubenteil mit abnehmbarem
Dach;

Fig. 8 eine Isolierhaube mit einer Kamera;

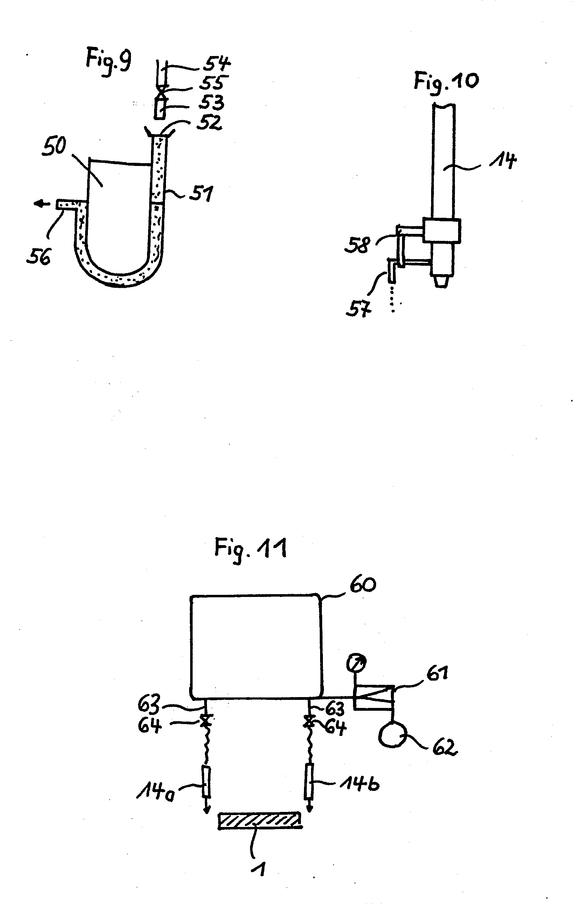

Fig. 9 das offene Kühlsystem einer Brennschneidmaschine in schematischer Darstellung;

Fig. 10 einen in das offene Kühlsystem nach
Fig. 9 einbezogenen Brenner; und

Fig. 11 eine Ringleitung für eine Brennschneidmaschine mit zwei Brennern.

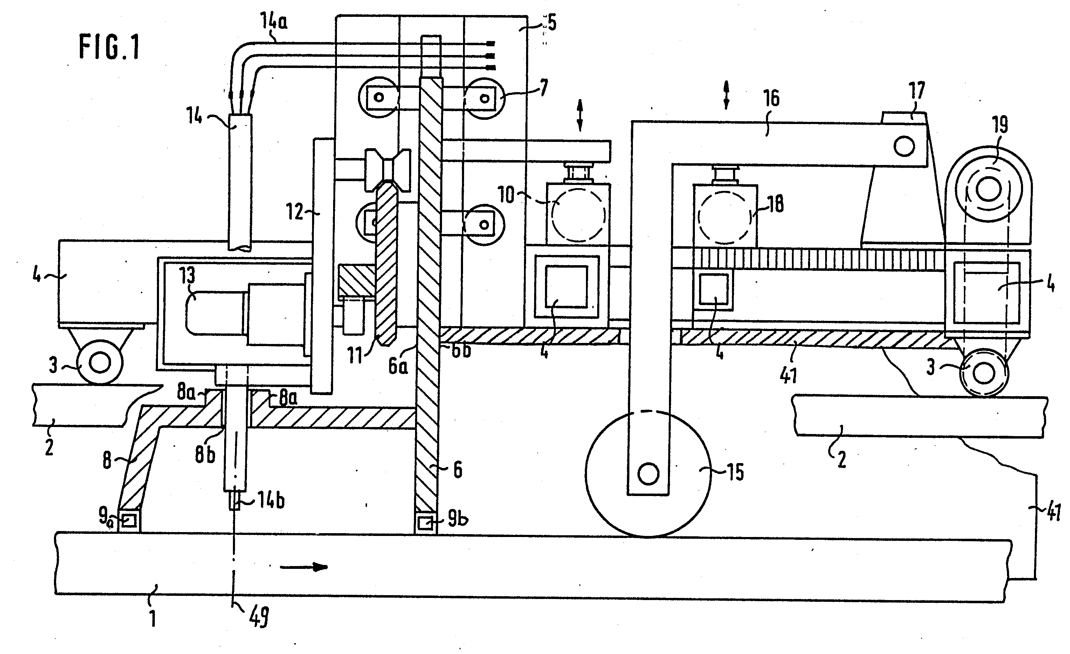

In Fig. 1 ist auf einem Werkstück 1, das einen Strang darstellt, eine Brennschneidmaschine dargestellt, die über Laufräder 3 auf Laufschienen 2 längs des Werkstücks 1 verfahrbar ist. Die Brennschneidmaschine besteht im wesentlichen aus einer durch Rahmenprofile 4 gebildeten Grundkonstruktion, an der über eine Hubführung 5 ein Hubschild 6 befestigt ist. Über Hubrollen 7 ist der Hubschild 6 in senkrechter Richtung auf das Werkstück 1 zu oder von diesem nach oben wegbewegbar. Der Hubschild 6 trägt eine Schallhaube 8, die ebenfalls wie der Hubschild 6 mit Aufsetzprofilen 9 versehen ist. Auf diese Weise ist es möglich, die Brennschneidmaschine auf das Werkstück 1 aufzusetzen, so daß die Reibung eine Mitnahme für einen eventuell erforderlichen Synchronlauf mit dem Werkstück 1 erzeugt wird. Durch die Schallhaube 8 ist ein Schallschutz und Wärmeschutz gewährleistet, so daß der Schneidbrenner außerordentlich umgebungs- bzw. umweltfreundlich arbeitet und die über der Schallhaube 8 angeordnete Brennschneidmaschine gegen Wärme vom Werkstück 1 schützt. Durch die Profile 9 an der Unterkante des Hubschilds 6 und der Schallhaube 8 wird auch der richtige Abstand der Düse des Brenners 14 vom Werkstück 1 sichergestellt. Weiter ist die Schallhaube 8, was im einzelnen nicht dargestellt ist, mit seitlichen Abschlußwänden versehen, über die Oberfläche des Werkstücks 1 nach unten bis zu den das Werkstück tragenden Rollen hinausragen, möglichst nahe an den Rollgangswangen, um mit diesen sich zu überlappen.

Um weiter den Wärmeschutz des Brenners und insbesondere des Schneidantriebs 13 und der Kabel- und Versorgungsschläuche 14a gegen Wärme vom Werkstück 1 zu schützen, ist der Brenner 14 in einem quer zur Vorschubrichtung des Werkstücks 1 in der Oberplatte der Schallhaube 8 vorgesehenen Bewegungsschlitz 8b geführt, wobei der Bewegungsschlitz 8b extrem schmal mit ca. 15 bis 30 mm ausgebildet ist und an den Seiten hohe Führungen 8a aufweist, die 75 bis 300 mm betragen können. Auf diese Weise ist der gesamte Brennerwagen 12 mit dem Schneidantrieb 13 und dem Brenner 14 mit den Kabel- und Versorgungsschläuchen 14a, die ungeschützt herabhängen, trotz der Öffnung in der Oberplatte der Schallhaube 8 gegen direkte Wärmestrahlung bzw. aufsteigende Warmluft vom Werkstück 1 gut geschützt. Während an der Vorderseite 6a des Hubschilds 6 die Brennschneidmaschine 13, 14 und die Schutzhaube 8 angeordnet ist, befindet sich auf der Rückseite 6b die Längenmeßeinrichtugn 15, 16. Durch den vom Hubschild 6 gewährten Schutz kann die Meßrolle 15 nahe am Hubschild 6 und damit auch nahe an der Düse 14b des Brenners 14 angeordnet sein. Nachdem über den Hubantrieb 10/11 das Schutzschild 6 auf das Werkstück 1 abgesenkt ist, ist der Raum an der Rückseite 6b des Schutzschildes 6 vor dem Schneidvorgang geschützt,und durch den Hubantrieb 18 der Längenmeßeinrichtung kann die Rolle 15 auf das Werkstück 1 gesenkt werden, wobei über den Verfahrantrieb 19 oder die Reibung mittels der Profilschiene 9 der Synchronlauf mit dem Werkstück 1 erreicht werden kann.

Insbesondere aus den Fig. 2 und 3 ist zu entnehmen, daß die Meßrolle an einem Knickhebel 16 befestigt ist, der gelenkig mit einem Hebellager 17 verbunden ist. Wie insbesondere Fig. 3 zeigt, trägt der Knickhebel 16 links und rechts neben der Meßrolle 15 angeordnete Kühlscheiben 21, die in einem Kühlwasserbad 22 umlaufen. Das Kühlwasserbad 22 befindet sich in einem am Knickhebel 16 befestigten Kühlkasten 23, der an seiner Unterseite einen Schlitz 23a aufweist, durch den sich die gegenüber den Kühlscheiben 21 größere Meßrolle 15 nach unten zum Werkstück 1 erstreckt. Ein Wasserzulaufrohr 24 ist mit einem Einstellhahn 25 und einem Magnetventil 26 versehen, so daß über ein Endschaltersystem ein regelmäßig gesteuerter Kühlwasserzufluß erfolgt. Zu diesem Zweck ist in einer bestimmten Höhe ein Wasserablaufrohr 27 vorgesehen, sowie ein Schwimmer 28, der eine Schwimmerstange 29 trägt.

Wie insbesondere Fig. 2 zeigt, ist die Schwimmerstange 29 mit einem Schwimmernocken 30 versehen, dem ein Endschalter 31 für Wassermangel und ein Endschalter 32 für Wasserüberfluß zugeordnet ist, so daß über das entsprechende Magnetventil 26 die Einstellung des Wasserzulaufs erfolgt. Wie weiter aus Fig. 3 zu ersehen, ist geschützt im Wasserkasten 23 der Impulsgeber 33 an einem Halter 33a befestigt.

In den Fig. 4 und 5 ist eine abgewandelte Längenmeßeinrichtung dargestellt, bei der die in Bezug auf die Fig. 1 bis 3 erläuterten Bezugszeichen die gleiche Bedeutung haben. Wie Fig. 4 zeigt, ist die Meßrolle 15 an einem Hebel 34 befestigt, der wiederum mit einem Hebellager 17 verbunden ist. Am Hebel 34 ist eine Hubstange 35 angebracht, die an den Hubantrieb 18 angeschlossen ist, um die Meßrolle 15 vom Werkstück abzuheben. Auch bei dieser Ausführungsform ist das Wasserzulaufrohr 24 mit einem Einstellhahn 25 und einem Magnetventil 26 versehen. In Abwandlung zur bisherigen Ausführungsform ist nach Fig. 5 die Meßrolle 15 mit einer Hohlwelle 15a versehen, die im Hebel 34 gelagert ist und in die das Wasserzulaufrohr 24 axial einmündet.

Am der Einmündung des Wasserzulaufrohrs 24 gegenüberliegenden Ende der Hohlwelle 15a ist eine Kühlwasserabflußscheibe 36 angeordnet.

Die Kühlwasserabflußscheibe besitzt radial sich erstreckende Abflußkanäle 36a, durch die das Wasser in den Kühlwassersammelkasten 37 gelangt, der an einer Seite des Hebels 34 befestigt ist und an der Seite vom Werkstück 1 einen Wasserabfluß 27 aufweist. Eine mit der Meßrolle 15 verbundene Impulsgeberwelle 38 führt zum Impulsgeber 33, der am Sammelkastenhalter 39 befestigt ist, durch den auch die Meldeadern 40 verlaufen.

In Fig. 6 ist in schematischer Darstellung ein Gießstrang 1 gezeigt, auf dem eine Brennschneidmaschine sich befindet, die wiederum mit Hilfe von Rädern 3 auf einer Laufbahn 2 läuft, von der nur ein Stück gezeigt ist. In einem nicht näher dargestellten Treibrichtrollengerüst sind Rollen 48 gelagert, die den Gießstrang 1 in Fig. 6 nach rechts bewegen. Die Brennschneidmaschine besitzt einen Brenner 14, der auf der dem ankommenden Strang 1 zugekehrten Seite der Brennschneidmaschine angeordnet ist. Damit die Brennschneidmaschine während der Erzeugung eines Brennschnitts synchron läuft, steht sie mit diesem in einer Antriebsverbindung durch eine Aufsetzkufe 9a. Die Aufsetzkufe 9a befindet sich, in Strangbewegungsrichtung gesehen, vor der Schneidlinie 49 am Gießstrang 1. Die Aufsetzkufe 9a ist über die Schutzhaube 8 mit der Brennschneidmaschine 2 verbunden. Die Aufsetzkufe 9a bildet das untere Ende der Vorderwand der Schutzhaube 8, die mit dem Isolierdeckel 41 im unteren Bereich der Brennschneidmaschine angeordnet ist. Die Schutzhaube 8, 41 wiederum bildet einen Teil eines teleskopartig ineinanderschiebbaren Isolierkanalsystems 42 bis 45. Dieses Isolierkanalsystem besteht aus einem feststehenden Kanalteil 42, das zwischen dem Treibrichtrollengerüst und der Brennschneidmaschine in ihrer am weitesten in Richtung auf den Gießstranganfang vorgeschobenen Stellung angeordnet ist, und einem Kanalteil 43, das den Abführrollgang abdeckt und an der Stelle beginnt, an der sich die Brennschneidmaschine in der am weitesten in Gießrichtung vorgeschobenen Stellung befindet. Diese feststehenden Isolierkanalteile 42 und 43 von denen die Deckplatten im Schnitt dargestellt sind, umfassen auch Seitenteile, die sich auch über den Bereich erstrecken, in dem sich die Brennnschneidmaschine auf ihrer Laufbahn 2 hin- und herbewegt. An der Brennschneidmaschine sind zum Isolierkanalsystem gehörende Isolierdeckel 44 und 45 befestigt, die sich teleskopartig über den feststehenden Isolierkanalteil 42 bzw. 43 verschieben, wenn die Brennschneidmaschine sich auf ihrer Laufbahn 2 hin- und herbewegt.

Auf diese Weise ist nicht nur eine optimale Wärmeisolierung erreicht, sondern auch eine Dichtwirkung gegenüber Geräuschen, da durch das vorhandene Isolierkanalsystem weder Wärme noch Geräusche – außer durch Schnittfugen – nach unten oder andere Spalten seitlich austreten können.

In Fig. 7 ist in vergrößertem Maßstab die Schutzhaube 8 dargestellt, die durch die Aufsetzkufe 9a mit dem Gießstrang 1 in Berührung kommt. Um den Brenner 14 beobachten zu können, ist das Dach 8a der Schutzhaube 8 abhebbar oder aufklappbar, wie es in Fig. 7 gestrichelt dargestellt ist.

In Fig. 8 ist eine andere Möglichkeit dargestellt, indem für einen Monitor eine Kamera 46 mit wassergekühltem Gehäuse und Tubus 47 vorgesehen ist, der die Haube 8 durchdringt und eine Beobachtung des Brenners 14 ermöglicht.

Auf diese Weise wird in einer optimal energiesparenden Weise die Durchführung eines Brennschnitts erlaubt, ohne daß Betriebsstörungen durch das Abführen der Bramme, beispielsweise beim Durchführen eines Schopfschnittes, zu befürchten sind.

Eine vorteilhafte Kühlung der Brennschneidmaschine ist schematisch in Fig. 9 dargestellt. Es handelt sich um eine offene Maschinenkühlung, bei der die Brennschneidmaschine 50 einen Doppelmantel 51 aufweist. Dieser Doppelmantel 51 wird von Kühlwasser druchströmt, indem in einem offenen Zulauf 52 das Ende 53 einer Zuführleitung 54 mündet, die mit einem Absperrventil 55 versehen ist. Auf diese Weise sind keine besonderen Aufwendungen für die Zuführung erforderlich, indem eine normale Wasserleitung mit Absperrventil 55 den Doppelmantel 51 der Brennschneidmaschine 50 mit Kühlwasser versorgt. Das unten liegende Teil des Kühlmantels 51 bzw. der Wandung der Brennschneidmaschine 50 ist gebogen, um den Kühlmittelfluß zum Kühlmittelausgang 56 zu erleichtern.

An diese offene Kühlung der Brennschneidmaschine können andere Aggregate angeschlossen werden. Fig. 10 zeigt einen Brenner 14, der in die Maschinenkühlung der Brennschneidmaschine 50 integriert ist, d.h. das Kühlmittel fließt auch durch den Brenner 40 und tritt über einen Ablaufstutzen 57 , der durch einen Halter 58 am Brenner 14 befestigt ist, aus. Dabei kann die Austrittsöffnung des Kühlmittels aus der offenen Maschinenkühlung so angeordnet sein, daß noch andere wichtige, außerhalb der Brennschneidmaschine liegende Teile, beispielsweise im Rollgang, gekühlt werden.

Durch die in den Fig. 9 und 10 dargestellte Maschinenkühlung ist es möglich, die Strömung des Kühlwassers beispielsweise im Kühlmantel 51 durch geeignete Querschnitte zu regulieren, so daß die Strömung des Kühlwassers dem entsprechenden Kühlbedarf angepaßt ist. Ebenso sind die Kühlwasserhohlräume so bemessen, daß eine Mindestreserve an Kühlmittel sichergestellt ist, so daß bei einer vorübergehenden Störung der Kühlwasserzufuhr die Brennschneidmaschine und die gegebenenfalls ihr zugeordneten Aggregate ausreichend geschützt sind.

In Fig. 11 ist ebenfalls in schematischer Darstellung eine Brennschneidmaschine dargestellt, die mit zwei Brennern 14a und 14b ausgestattet sind. Beispielsweise werden zwei gegenläufig arbeitende Brenner 14a, 14b eingesetzt, um ein sehr breites Gießstrangwerkstück 1 zu durchtrennen. Durch die in Fig. 11 dargestellte Ringleitung 60 zur Zuführung der zum Betrieb der Brenner 14a, 14b erforderlichen Medien werden gesonderte Regler für jeden der Brenner 14a, 14b eingespart, indem nur ein Regler 61 erforderlich ist, der durch einen Stellmotor 62 über eine nicht dargestellte Fernsteuerung betätigt wird. Über den Regler 61 und die Ringleitung 60 werden so gemeinsam die beiden Brenner 14a, 14b gesteuert. Für das sogenannte Pausenschneiden, bei dem der Betrieb des Brenners unverzüglich unterbrochen werden muß, ist in der dargestellten Schneidsauerstoffzuführleitung 63 ein Schnellentlüftungsventil 64 vorgesehen, das unverzüglich die Schneidsauerstoffzuführleitung 63 beim Abschalten entleert, so daß der Brennerbetrieb augenblicklich abgestoppt wird. Während in Fig. 11 nur eine Ringleitung für den Schneidsauerstoff dargestellt ist, sind für die beiden weiteren Medien - den Heizsauerstoff und das Heizgas - ebenfalls Ringleitungen erforderlich, so daß neben einer Einsparung an Reglern und Stellmotoren außerdem eine wirtschaftliche Fernsteuerung und Automatisierung mit Hilfe der Ringleitung erreicht wird. Die Regler mit ihrer Fernsteuerung können entsprechend den baulichen Gegebenheiten links oder rechts angeordnet sein. Auch ist es in konstruktiv sinnvoller Weise möglich, daß die Ringleitungen 60 in den Maschinenrahmen integriert sind.

Mit der vorbeschriebenen Erfindung wird eine Brennschneidmaschine verfügbar gemacht, die in einer konstruktiv möglichst wenig aufwendigen Weise einen in technischer und wirtschaftlicher Hinsicht optimalen Betrieb gewährleistet.

Patentansprüche

1.      Brennschneidmaschine mit Schallschutz- und Isolierhauben zum Abtrennen zuverlässig genauer Stücklängen von auf einem Rollgang oder auf einem Tisch liegenden Werkstücken aus Stahl mittels eines quer zur Vorschubrichtung bewegbaren und in seiner Arbeitshöhe verstellbaren Schneidbrenners, dem eine Längenmeßeinrichtung zur Messung von relativ zwischen der Brennschneidmaschine und dem Werkstück zurückgelegter Wegstrecke mit Hilfe eines an der Werkstückoberfläche ablaufenden Meßrades zugeordnet ist,

d a d u r c h     g e k e n n z e i c h n e t ,

daß ein Hubschild (6) vorgesehen ist, das an seiner Vorderseite (6a) die Schutzhaube (8) trägt, die beim Absenken auf dem Werkstück (1) zusammen mit dem Hubschild (6) zur Auflage kommt, daß über die Schutzhaube (8) am Hubschild (6) der oder die Schneidbrenner (12) mit Bewegungseinrichtungen (13) angebracht sind und andere wärmeempfindliche Aggregate (16) der Brennschneidmaschine sich außerhalb der Schallhaube (8) befinden.

2.      Brennschneidmaschine nach Anspruch 1, dadurch gekennzeichnet, daß die Schutzhaube (8) flach und weit überkragend angeordnet ist, um die Brennerbewegungseinrichtung (13) und die etwa in Maschinenmitte ungeschützt herabhängenden Kabel und Versorgungsschläuche (14a) gegen direkte Wärmestrahlung bzw. aufsteigende Warmluft vom Werkstück (1) zu schützen, und daß die Schutzhaube (8) mit seitlichen Abschlußwänden versehen ist, die über die Oberfläche des Werkstücks (1) nach unten bis zu den das Werkstück tragenden Rollen hinausragen, möglichst nahe an den Rollgangswangen, um mit diesen sich zu überlappen.

3. Brennschneidmaschine nach Anspruch 1 oder 2, dadurch gekennzeichnet, daß das Hubschild (6) und die Unterseite der Schutzhaube (8) mit Aufsetzprofilen (9a, 9b) versehen sind, die gemeinsam oder einzeln durch Reibung eine Mitnahme für einen eventuell erforderlichen Synchronlauf mit einem Werkstück (1) erzeugen.

4. Brennschneidmaschine nach einem der Ansprüche 1-3, dadurch gekennzeichnet, daß der Abstand der Unterkante (9) des Hubschilds (6) von der Schutzhaube (8) den richtigen Abstand der Düse (14b) des Brenners (14) vom Werkstück (1) sicherstellt.

5. Brennschneidmaschine nach einem der Ansprüche 1-4, dadurch gekennzeichnet, daß der Brenner (14) durch einen quer zur Vorschubrichtung des Werkstücks (1) in der Oberplatte der Schallhaube (8) vorgesehenen Bewegungsschlitz (8b) geführt ist und daß vorzugsweise der Bewegungsschlitz (8b) extrem schmal, minimal größer als der Brennschaft ausgebildet ist und an den Seiten hohe Führungen (8a) etwa das Fünf- bis Siebenfache der Schlitzbreite aufweist.

6. Brennschneidmaschine nach einem der Ansprüche 1-5, dadurch gekennzeichnet, daß auf der hinteren Seite (6b) des Hubschilds (6) zur Längenmessung eine Meßrolle (15) angeordnet ist und an einem gelenkig befestigten Hebel (16) befestigt ist, der neben der Meßrolle (15) angeordnete Kühlscheiben (21) trägt, die in einem Kühlwasserbad (22) umlaufen.

7. Brennschneidmaschine nach einem der Ansprüche 1-6, dadurch gekennzeichnet, daß der Brenner (14) auf der dem ankommenden Strang (1) zugekehrten Seite der Brennschneidmaschine angeordnet ist und die Aufklemmung (9a),in Strangbewegungsrichtung gesehen, vorzugsweise vor der Schneidlinie (7) am Gießstrang (1) erfolgt.

8. Brennschneidmaschine nach Anspruch 7, dadurch gekennzeichnet, daß die Schutzhaube (8, 41) einen Teil eines teleskopartig ineinander schiebbaren Isolierkanalsystems (42, 43, 44, 45) bildet, daß der Isolierkanal (42, 43) aus einer festen Unterkonstruktion mit Seitenwänden besteht, über denen nur die Isolierdecke (44, 45) oder eine entsprechende Jalousie mit der Brennschneidmaschine mitläuft, und daß der Isolierkanal (42, 43, 44, 45) mit der Schutzhaube (8, 41) eine Dichtwirkung gegen Wärmeabfluß und Geräusche erzeugt, wobei vorzugsweise das Dach der Schutzhaube (8a) am Brenner (14) zur Einsicht abhebbar ist.

9.    Brennschneidmaschine nach einem der Ansprüche 1-8, dadurch gekennzeichnet, daß für einen Monitor eine Kamera (46) mit wassergekühltem Gehäuse und Tubus (47) vorgesehen ist, die die Haube (8) durchdringt, und daß an beiden Seiten je eine Kamera (46, 47) angeordnet ist.

10.    Brennschneidmaschine nach einem der Ansprüche 1 - 9 mit einer Mehrzahl von Brennern, dadurch gekennzeichnet, daß für jedes zuzuführende Medium, wie Schneidsauerstoff, Heizsauerstoff und Heizgas, eine gesonderte Ringleitung (60) vorgesehen ist, von der Versorgungsleitungen (63) für die einzelnen Brenner (142, 146) abgehen,
daß für diese ein gemeinsamer Regler (61) in der Zuführleitung (65) zur Ringleitung (60) vorgesehen ist und daß in den Versorgungsleitungen (63) zwischen Ringleitung (60) und Brenner (14a, 14b) Schnellentlüftungsventile (64) angeordnet sind, die vorzugsweise unmittelbar am Austritt der Versorgungsleitungen (63) aus der Ringleitung (60) sich befinden, wobei die Gaszuführungen (65) zur Ringleitung und die Steuertafel mit den zugeordneten Reglern (61) wahlweise links oder rechts vom Gießstrang (1) montierbar sind.

11.    Brennschneidmaschine nach einem der Ansprüche 1 - 10 mit einem doppelten Kühlmantel, dadurch gekennzeichnet, daß der Kühlmantel (51) einen offenen Einlaufstutzen (52) aufweist, in den Kühlwasser aus einer Kühlwasserzuführleitung (54) fließt, daß Kühlwasser aus einem offenen Ablaufstutzen (56) den Kühlmantelhohlraum (51) verläßt, und daß die offene Maschinenkühlung auch die Brennerkühlung umfaßt, indem das Wasser aus dem Kühlmantel (51) über den Brenner (14) kühlende Kanäle (57) austritt, wobei die Strömung des Kühlwassers vorzugsweise durch geeignete Querschnitte reguliert ist und die Kühlwasserhohlräume eine Mindestreserve an Kühlmittel sicherstellen, so daß bei vorübergehender Störung in der Kühlwasserzuführung die Brennschneidmaschine (50) geschützt ist.

FIG.1

Einlauf

FIG. 2

FIG. 3

seitlicher
Auslauf

FIG.4

FIG.5

Fig. 6

Fig. 7

Fig. 8

Fig.9

50

51

52
53
55
54

56

Fig.10

14

58

57

Fig. 11

60

63
64

63
64

61

62

14a

14b

1

Europäisches Patentamt
Patentamt

**EUROPÄISCHER RECHERCHENBERICHT**

**0116110**
Nummer der Anmeldung

EP 83 10 8326

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-3 103 402 (I.P.U. LTD.) * Ansprüche; Figuren * | 1-3,5 | B 23 K 7/02 B 22 D 11/126 |
| | --- | | |
| Y | DE-A-2 553 488 (GEGA LOTZ LTD.) * Figuren 1,6, Position 12 * | 1 | |
| A | | 6,7 | |
| | --- | | |
| Y | DE-A-2 836 958 (MESSER GRIESHEIM GMBH) * Ansprüche, Figuren, Seite 15, letzter Absatz * | 1,2,5 | |
| A | | 8,10 | |
| | --- | | RECHERCHIERTE SACHGEBIETE (Int. Cl. ³) |
| Y | DE-A-2 415 655 (GEGA-GESELLSCHAFT FÜR GASETECHNIK LOTZ KG) | 1-3 | |
| A | | 9 | B 22 D 11/00 B 23 K 7/00 |
| | --- | | |
| Y | EP-A-0 051 250 (BFI BETRIEBSTECHNIK GMBH) * Seite 10, Absatz 2, Ansprüche, Figuren * | 1-3,5 | |
| | --- -/- | | |

Der vorliegende Recherchenbericht wurde für alle Patentansprüche erstellt.

| Recherchenort BERLIN | Abschlußdatum der Recherche 23-03-1984 | Prüfer WUNDERLICH J E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 449 137 (GEGA-GESELLSCHAFT FÜR GASETECHNIK LOTZ KG) * Figur 1 * | 1,6 | |
| A | EP-A-0 009 753 (GEGA-GESELLSCHAFT FÜR GASTECHNIK LOTZ GMBH & CO. KG) * Ansprüche, Figur * | 9 | |
| A | US-A-3 227 432 (J.E. McDERMOTT) * Figuren 2,4; Spalte 2, Zeilen 45-60 * | 10,11 | |

RECHERCHIERTE SACHGEBIETE (Int. Cl. 3)

Der vorliegende Recherchenbericht wurde für alle Patentansprüche erstellt.

| Recherchenort BERLIN | Abschlußdatum der Recherche 23-03-1984 | Prüfer WUNDERLICH J E |
|---|---|---|